## Europäisches Patentamt
## European Patent Office
## Office européen des brevets

(19)

(11) Publication number: **0 067 795**
**B1**

(12)

# EUROPEAN PATENT SPECIFICATION

(45) Date of publication of patent specification: **13.08.86**

(51) Int. Cl.⁴: **B 01 D 23/04**

(21) Application number: **82830130.9**

(22) Date of filing: **13.05.82**

(54) **Slurry removal process in the water purification treatment and filtration equipment for carrying out the process.**

| | |
|---|---|
| (30) Priority: **02.06.81 IT 2208681** | (73) Proprietor: **NATRO CELLULOSA INDUSTRIA IMBALLAGGI CARTA S.P.A.**<br>**Via G. Camozzi 124**<br>**I-24100 Bergamo (IT)** |
| (43) Date of publication of application:<br>**22.12.82 Bulletin 82/51** | |
| | (72) Inventor: **Camerini, Gianni**<br>**Piazza della Repubblica 28**<br>**I-20124 Milano (IT)** |
| (45) Publication of the grant of the patent:<br>**13.08.86 Bulletin 86/33** | |
| (84) Designated Contracting States:<br>**AT BE CH DE FR GB LI LU NL SE** | (74) Representative: **Rapisardi, Mariacristina, Dr. Proc.**<br>**Largo V Alpini 15**<br>**I-20145 Milano (IT)** |
| (56) References cited:<br>**CH-A- 488 483**<br>**DE-C- 115 332**<br>**FR-A-2 318 118**<br>**FR-A-2 383 130** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process and equipment for separating and disposing of sludge in waste water treatment.

The known art is defined in the pre-characterizing clause of claim 1, which summarizes the teaching of FR—A—2 383 130, in which the separation of sludge from water occurs partly by filtration and partly by sedimentation or decantation of the sludge.

The task of the invention should be envisaged in the solution of the problem involved in the improvement of the techniques of separation of sludge from muddy water and of disposal of the separated sludge. In particular, the object of the invention is to carry out the separation prevailingly by filtration.

The said solution is achieved by the invention as defined in the characterizing clause of claim 1.

The invention ensures a dried final product with yields substantially up to 80% dry matter perfectly packed, with no influence on operating costs of the purification treatment equipment.

The capacity of the invention to attain such high yield levels as mentioned above permits, moreover, the filtration of not thoroughly settled out turbid waters, or the treatment of a solid dispersion in hard decantable water. In fact, the invention will ensure satisfactory yields in dry product even from a material very high in liquid contents.

Providing for drying stage subsequent to filtration, as taught by the invention, the process ensures attainment of high, dry product yields otherwise unobtenable by normal filtration only. All of the above, with no interference in filtration times (the drying stage is effected outside the filtration unit so that this latter can operate independently of said drying stage), without increasing operating costs of the equipment and even reducing them indeed (drying is accomplished by natural action; the packing containers act as filter elements, with obvious savings quantity of employed material; the sludge to be removed with less per cent moisture contents does not require the use of expensive containers suitable for transport purpose), and with the advantage of suppressing all of the difficulties connected with the movement of a material high in water contents.

The removal of sludge higher in dry product contents moreover turns into markedly reduced treatment costs.

The process according to the invention is carried out by conveying the muddy solution into a set of bags (made of a filter material) until the bags are filled with the sludge: the definitively filtered water is conveyed to the drainage system, whereas the bags are closed and stacked outdoors; natural evaporation of the liquid phase permits to obtain a dry and hard product; percentage of liquid decreases to 20% referred to the separated solid product.

The process of the invention, for removal of sludge may be carried out as follows: the bags hanging from the supporting frame of the filtration unit are supplied with the muddy solution in order to obtain the separation of the sludge (which is collected inside the bag) from the water, which passes through the filter material. This first filtration operation may be conducted by filling the bag with the muddy solution and then allowing filtration to continue the bag being hanging, for 24—48 hours; in this case a pasty sludge is obtained (allowing to be shovelled), 20—30% dry. Otherwise the bags can be filled a first time, whereupon supply is stopped and filtration is allowed to continue for a few hours (e.g. 2h), then the bags are filled again, the supply with the muddy solution is stopped again and the filtration is allowed to continue for a longer time (e.g., 5h); the same operations as above are repeated once more, and filtration is allowed to go on for an even longer time (e.g., 9h); at last, the bags are filled again, and filtration goes on for 24—36 hours more.

It is preferable to carry out the process of the invention by feeding the filter bags as above described with the slimy solution each bag remains filled up for a desired length of time (e.g., 10—15h). Then, feeding is stopped and filtration is allowed to continue, the bags being hanging. Thereafter, the bags are withdrawn from the spouts to which they were hanged during the filtration stage, and the bags are closed at their mouth by means of self-tightening or self-twistening ribbon ties, or the like: the sludge now is in filtered and packed condition. The bags are stacked on standard pallets, and the charged pallets are stacked in stores, even in the open air. In this way, the sludge in the bags is allowed to reach a further dehydration stage which for the most takes place by evaporation.

Thus, sludges with an up to 80% dry-value can be obtained by the process method of the invention.

The pallets carrying the bags with the now dried material therein, can be charged then on usual transport vehicles in order to be delivered to disposal areas.

The description of an illustrative and not restrictive way of esecution referred to a filter unit for carrying out the process of the invention is given below with references to the enclosed drawings, in which:

— Figure 1 is a front view of a filter unit according to the invention;

— Figure 2 shows, in a top view, the lower part of the filter unit in figure 1;

— Figure 3 shows a filter-bag during the filtration stage; the bag having been filled with the muddy solution and removed from the filtration unit in figure 1;

— Figure 4 shows the manner in which the filter-bags — such as the one in figure 3 — may be palletized during the drying stage of sludge;

— Figure 5 is a filter-bag that has been opened up to show contents of the bag after the drying stage.

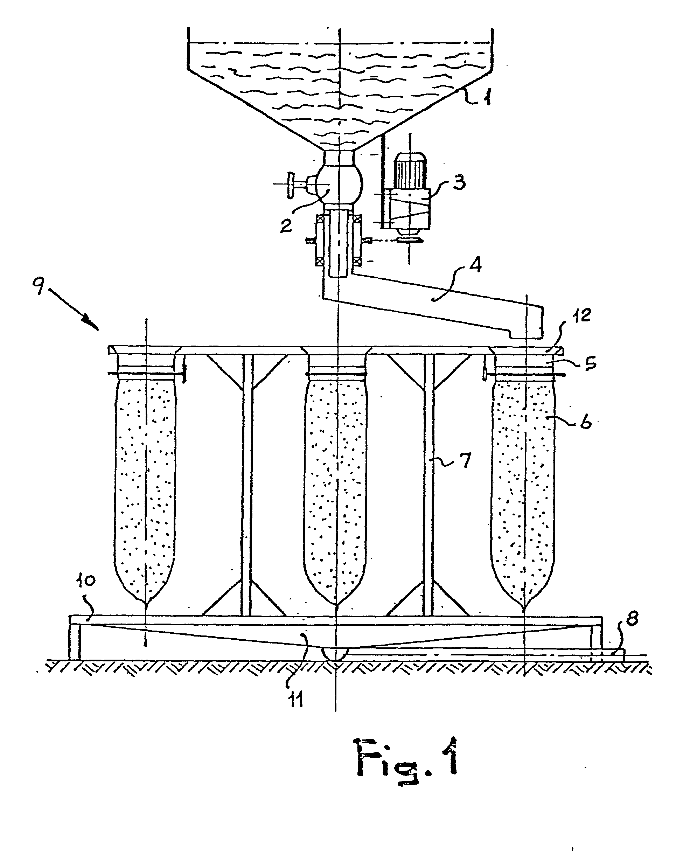

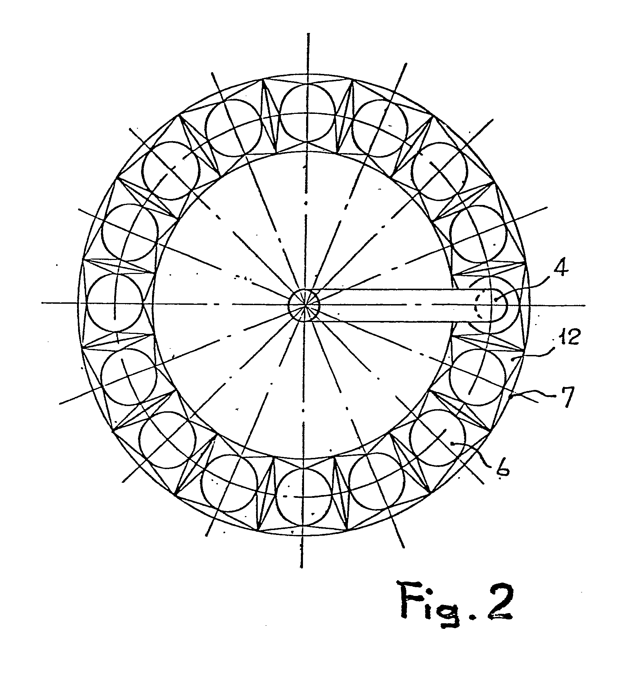

The filter unit shown in figures 1 and 2 includes a conventional type of decanter 1 which is provided as its bottom part with a valve 2 and with a revolving feeder or spout 4 that is operated from a geared motor 3. A filtration battery unit 9, circular in shape, is installed beneath said decanter 1 and comprises a framework 7 set up on a basement 10, this basement including a tank 11 and a pipe 8 for collecting and discharging the filtered water, respectively.

On the circular rim of said frame 7 are placed inlet spouts 5 on which filter-bags 6 are hanged through their mouths.

The inlet spouts 5 are advantageously provided at their top with small hoppers 12 which make easier the flowing of the slimy solution into the bags.

On starting the filling of filter-bags 6, suitable automatisms (not shown) carry the revolving spout 4 over the mouths of the bags to be filled. Thus, discharged water is collected into tank 11 to be either recycled into the system or conveyed to the discharge.

The filter-bags 6 can be made of any appropriate filter cloth obtained from a material — such as, for example a polypropylene cloth — which is resistant and inert to chemicals and bacteria; these bags are closed at the bottom, and have open mouths. The number of bags per basic unit can vary depending on the requirements of the purification treatment concerned, and several units can be installed in series or in parallel, and can be automatically charged at predetermined times.

With the above described equipment it is possible to carry out the process of the invention according to any requirement.

For instance, the bags can be filled in successive stages; or the bags can be fed so that they are kept filled for a predetermined length of time.

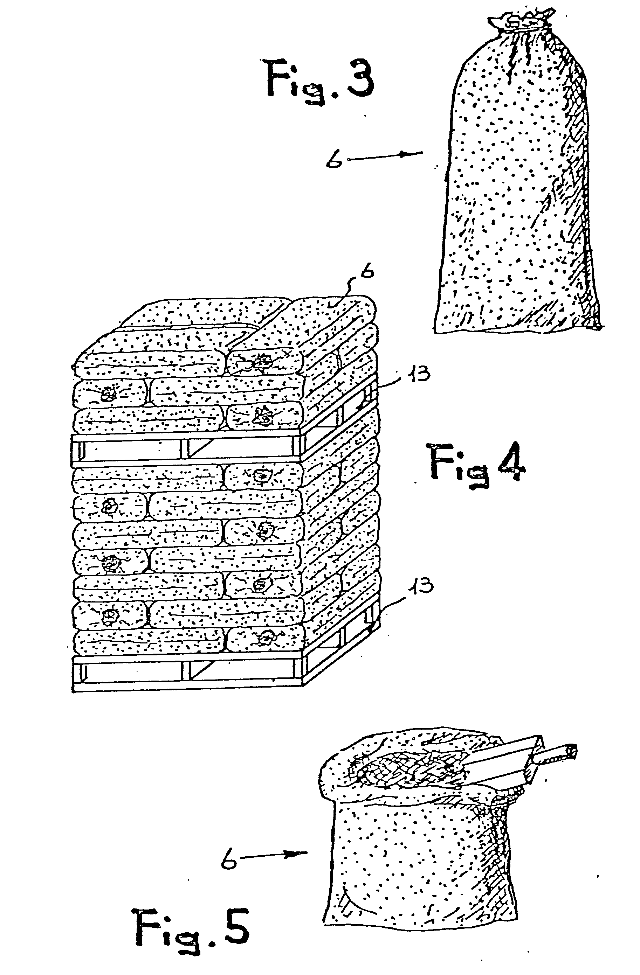

Once the bags are filled, the bags are detached from their spouts 5, they are charged on pallets — such as the pallet 13 — and the loaded pallets are stacked (see figure 4). When the sludge in the bags has attained the desired drying level (see figure 5), the filter-bags are charged on transport vehicles for removal to a dump.

With the process and the equipment according to the invention, filtration-dehydration of sludge goes on also outside the filtration unit, while as concerns bag filters, for example dehydration of sludge stops on emptying the tubes and, thus, at still very high moisture levels. The ability of the invention to achieve combined filtration and packing of the sludge brings to a very important advantage of this process, as compared with conventional systems where the cost for emptying the filters adds to the cost of the containers in which the sludge has to be collected; the high moisture contents of this latter, in fact, required the employment of expensive containers which in turn frequently require higher transportation costs due to the specially suited transport vehicles that have to be provided for.

Moreover, the process of the invention does no longer require such frequent cleaning operations as are necessary with the conventional filters which, due to the nature of the material being treated, have to be submitted to careful and expensive maintenance work at frequent intervals.

The following example, which is given by way of illustration and is by no means restrictive to the scope of the invention, describes a case where a sewage from an industrial effluent was treated for removing sludge therefrom. Indications as to the residual moisture contents are only given as a specimen, as drying rate is determinantly affected by a number of variable elements such as concentration and type of substances making up the sludge, co-existence of different pollutants, flocks size, climatic conditions under which operations are carried out, and the like.

Example

A plant was equipped for removing sludge from a waste effluent coming from an industry operating in the field of varnishes, paints and enamels, the waste effluent averaging a COD charge from 1500 to 2000 Kg/day and consisting of a suspension of about 5% dry product, in weight. Medium qualitative composition of the concerned sewage was as follows:
— coagulated suspended varnishes
— precipitated pigments
— calcium sulphate
— insoluble salts of heavy metals.

The filtration equipment was a twin filtration unit provided with a total number of 32 throwaway filter bags made with a spunbonded polypropylene with continuous fibers (a product sold by DUPONT under the trade name "Typar"), each bag having a volume of about 75 l.

The slimy solution was pumped into the filterbags according to the sequence as claimed for 10—15h, then filtration was allowed to go on at rest, for a 3-day period.

After the 3-day period of filtration, the bags contained about 80 Kg of sludge with a percentage of 20—25% dry product, in weight.

The filter-bag utilized in the process according to the invention was found to be able to filter a quantity of slimy solution 5% in weight equal to 4—5 times the volume of the bag within 2—3 days.

Subsequently, the bags were removed from the filtration unit, tied at their mouths with self-tightening ribbons and charged on two throwaway pallets, placed in position 2 + 1-by-5-layers totalling 32 filter-bags.

The charged pallets were put above another one and set aside for the time necessary to reach a suitable quantity for one delivery. After about 30 days the sludge was dehydrated so as to attain 45—60% dry product contents (even up to 80%-dry in summer months), in weight.

Each filter-bag, in which there were initially collected about 80 Kg of sludge 22,5% dry product in weight, — contained 30 to 40 Kg of sludge — 45—60% dry product in weight after parking.

After about 4 weeks more, the percentage of dry product in weight raised to 60—70%, and the residue was a hard, well dried-looking material.

Subsequently, the bagss were charged on a transport vehicle and taken away for delivery to a controlled dump area.

**Claims**

1. A process for separating sludge from muddy water and for disposing of the separated sludge in waste water treatment, comprising the steps of filling muddy water to be purified into disposable containers, leaving the thus filled containers at rest and allowing at the same time part of the water contained within the containers to be drained away from the containers, transferring the drained containers for drying and disposal, characterized in that the muddy water to be purified is filled to a desired level into disposable filtering bags made of selected resistant, inert filtering material and having each an integrally closed bottom forming an integral part of the filtering material of the bags, the thus filled bags are left at rest for a first selected time period to allow a first quantity of water contained within the bags to filter through the bags and be drained away and disposed of with the consequent lowering of the water level within the bags, restoring the desired water level within the bags by supplying again muddy water to the bags and leaving the bags again at rest for a subsequent selected time period, said subsequent time period being longer than the first resting time period, said restoring and resting steps being repeated at least once until a pasty shovellable sludge is accumulated within the bags up to a desired level thereby to constitute the only content of the bags upon closure of the bags, moving the bags away from the filtering place, leaving the bags filled with sludge to dry in a place distant from the filtering place and transferring the dried bags for disposal.

2. A process according to claim 1, wherein the muddy water to be purified is filled in succession into said bags arranged along a path, by means of a movable spout pouring in succession the muddy water into the bags upon movement of the spout from one bag to the other.

3. A process according to claims 1, 2, wherein said path is circular and said spout, which has a pipe portion radial to said circular path is caused to rotate about a point of rotation coinciding with the center of said circular path.

4. A process according to claims 1—3, wherein the muddy water to be purified is filled into said bags made of spunbonded polypropylene with continuous fibres.

5. A filtration equipment for carrying out the process according to any of the preceding claims, wherein said equipment consists of one or a plurality of filtration units (9) mounted in series or in parallel, characterized in that each filtration battery unit consists of a frame (7) substantially circular in shape as viewed from above, said frame (7) being provided with inlet spouts (5) and with filter-containers (6) tightly fitted at their mouths to said inlet spouts (5), the basement (10) of said frame (7) including a receiving tank (11) and a pipe (8) for collecting and discharging the filtered water, respectively and wherein a decanter (1) is placed above the filtration unit (9), said decanter (1) being provided at the discharge outlet with a revolving spout (4) for feeding the filter-containers (6), said filter-containers (6) being positioned beneath and facing towards the discharge section of the revolving spout (4), said revolving spout having an elongated portion extending radially to the circular shape of said frame and having its axis of rotation intersecting the center of said circular frame and wherein said discharge outlet is coaxial with said axis of rotation.

**Patentansprüche**

1. Verfahren zum Entfernen bzw. Ausscheiden von Schlamm und Schmutz aus schlammhaltigem Wasser und zum Wegführen und Unterwerfen des entfernten bzw. ausgeschiedenen Schlammes unter eine Behandlung für Abwässer, welches Verfahren folgende Phasen enthält: des zu reinigende, schlammhaltige Wasser wird in Einweg- bzw. Wegwerfbehälter eingefüllt bzw. eingeführt, die auf diese Weise gefüllten Behälter werden in Ruhe gestellt, wobei gleichzeitig ermöglicht wird, daß ein Teil des in den Behältern enthaltenen Wassers aus ihnen abgelassen wird bzw. abfließt, woraufhin die Behälter zum Trocknen und Wegwerfen weggeführt werden, dadurch gekennzeichnet, daß das zu reinigende schlammhaltige Wasser bis zu einer gewünschten Höhe in Filterbeutel bzw. -behälter der Einweg- oder Wegwerf-Art eingefüllt wird, die aus einem inerten, widerstandsfähigen und ausgewählten Filtermaterial hergestellt sind und die jeweils einen vollständig geschlossenen Boden besitzen, der einen integralen Teil mit dem Filtermaterial der Filterbeutel bzw. -behälter bildet, daß man die auf diese Weise gefüllten Filterbeutel bzw. -behälter für einen ersten, vorbestimmten Zeitabschnitt in Ruhestellung belässt, um auf diese Weise einer ersten in den Filterbeuteln enthaltenen Wassermenge zu ermöglichen, durch die Beutelwände nach außen hindurchzudringen und entfernt und eliminiert zu werden, wobei als Folge hiervon der Spiegel des Wassers in den Beuteln absinkt, daß man anschließend den gewünschten Wasserstand in den Filterbeuteln bzw. -behältern wiederherstellt, indem man diesen erneut schlammhaltiges Wasser zuspeist, und die Filterbeutel erneut in Ruhestellung für einen zweiten vorbestimmten Zeitabschnitt beläßt, der länger als der erste Zeitabschnitt ist, daß man die Phasen der Ruhestellung und der Wiederherstellung des Wasserstands mindestens einmal wiederholt, bis sich innerhalb der Filterbeutel bzw. -behälter pastöser Schlamm oder Schmutz bis zu einem solchen vorbestimmten Niveau angesammelt hat, daß er den einzigen Inhalt der Filterbeutel bildet, daß man anschließend die Filterbeutel bzw. -behälter verschließt, sie von der Filtrierstation entfernt und sie mit Schlamm und Schmutz gefüllt nachher an dieser von der Filtrierstation entfernten Stelle trocknet und sie daraufhin wegführt, damit sie vernichtet werden oder Abfälle bilden.

2. Verfahren nach Anspruch 1, dadurch gekennzeichnet, daß das zu reinigende schlammhaltige Wasser nacheinander in die entlang einer Einfüllbahn oder -strasse angeordneten Filterbeutel mit Hilfe eines beweglichen Einfüllschnabels eingefüllt wird, der das schlammhaltige Wasser nacheinander in die Filterbeutel im Verlaufe seiner Bewegung von einem Sack bzw. Filterbehälter zum anderen einfüllt.

3. Verfahren nach Anspruch 1 oder 2, dadurch gekennzeichnet, daß die Einfüllbahn oder -strasse kreisförmig ist und der Einfüllschnabel einen gegenüber der kreisförmigen Einfüllbahn oder -strasse radial verlaufenden, z.B. rohrförmigen Abschnitt besitzt und um einen Drehpunkt verschwenkbar gelagert ist, der mit dem Mittelpunkt der kreisförmigen Einfüllbahn oder -strasse zusammenfällt.

4. Verfahren nach einem der Ansprüche 1 bis 3, dadurch gekennzeichnet, daß das zu reinigende schlammhaltige Wasser in Filterbeutel eingefüllt wird, die aus Spinnvliss-Propylen mit kontinuierlichen Fasern hergestellt ist.

5. Filtriervorrichtung für des Ausführen eines Verfahrens nach einem der Ansprüche 1 bis 4, die eine oder mehrere in Reihe oder parallel geschaltete Filtriereinheiten (9) besitzt, dadurch gekennzeichnet, daß jede der Einheiten (9) ein in Draufsicht etwa kreisförmiges Gestell (7) besitzt, das mit Einlaßstutzen (5) und Filterbehältern (6) versehen ist, deren Einlaßmündungen an die Einlaßstutzen (5) dicht angesetzt sind, daß die Grundplatte (10) des Gestells (7) zum Aufnehmen und Abführen des gefilterten Wassers einen Aufnahmebehälter (11) und ein Ablaufrohr (8) besitzt, und daß oberhalb der Filtereinheit bzw. -einheiten ein Klärbehälter (1) vorgesehen ist, dessen Auslaßdurchtritt mit einem drehbaren Einfüllschnabel (4) verbunden ist, der zum Speisen der Filterbeutel bzw. -behälter (6) dient, die unterhalb des Einfüllschnabels angeordnet und zu dessen Ausflußöffnung gekehrt sind, wobei der drehbare Einfüllschnabel einen sich radial zum kreisförmigen Umfang des Rahmens erstreckenden verlängerten Abschnitt besitzt, die Drehachse des Einfüllschnabels den Mittelpunkt des kreisförmigen Rahmens schneidet und die Ausflußöffnung des Einfüllschnabels koaxial mit der Drehachse verläuft.

**Revendications**

1. Procédé pour séparer les boues d'une eau boueuse et pour envoyer les boues séparées à un traitement des eaux usées comprenant les phases qui consistent à introduire l'eau boueuse à épurer dans des récipients du type dit "perdus", à laisser au repos les récipients ainsi remplis et à permettre, en même temps, à une partie de l'eau, contenue dans ces récipients, d'être séparée des récipients, à transférer les récipients, vidés en partie par le séchage et l'élimination, procédé caractérisé en ce que l'eau boueuse qui doit être épurée, est introduite à un niveau voulu dans des sacs de filtrage du type dit "perdus", fabriqués dans une matériau de filtrage inerte, résistant et sélectionné, chaque sac ayant un fond hermétiquement fermé, formant une partie intégrante du matériau de filtrage des sacs, les sacs ainsi remplis étant laissés au repos pendant une première période, choisie pour permettre à une première quantité d'eau contenue dans les sacs de filtrer au travers de ces derniers et d'être déchargée et éliminée avec abaissement subséquent du niveau de l'eau dans les sacs, de rétablir le niveau de l'eau dans ces sacs, en y apportant une nouvelle quantité d'eau boueuse et laisser à nouveau les sacs au repos pendant une période déterminée, cette période étant plus longue que la première période de repos, ces phases de rétablissement du niveau et de repos étant répétées au moins une fois, jusqu'à ce qu'une boue pâteuse et manipulable se soit accumulée dans les sacs, jusqu'à un niveau désiré afin de constituer l'unique contenu des sacs, et après fermeture des sacs, de placer ces sacs à une certaine distance du poste de filtrage, de laisser les sacs remplis de boue dans un endroit éloigné du poste de filtrage et de transférer les sacs déssechés pour l'élimination ou la mise au rebut.

2. Procédé suivant la revendication 1, caractérisé, en ce que l'eau boueuse a épurer est introduite successivement dans les sacs placés le long d'un parcours au moyen d'un bec verseur mobile, versant l'eau fangeuse successivement dans les sacs, grâce à une déplacement du bec d'un sac à l'autre.

3. Procédé suivant l'une quelconque des revendications 1 et 2, caractérisé en ce que le parcours est circulaire et que le bec de versement, qui possède une portion tubulaire radiale par rapport à ce parcours circulaire, est amenée à tourner sur un point de rotation coïncidant avec le centre de ce parcours circulaire.

4. Procédé suivant l'une quelconque des revendications 1 à 3, où l'eau boueuse à épurer est introduite dans des sacs faits de propylène filé en fibres continues.

5. Appareil de filtration pour réaliser le procédé suivant l'une quelconque des revendications 1 à 4, où l'appareillage est constitué par une ou plusieurs unités de filtration (9) montées en série ou encore en parallèle, caractérisé en ce que chaque unité de la batterie de filtration est constituée par un châssis (7) de forme essentiellement circulaire si on le regarde d'en haut, ce châssis (7) étant pourvu de bec de versement d'entrée (5) et de récipients filtrants (6) strictement adaptés en correspondance entre leurs embouchures et les becs de versement d'entrée (5), le socle (10) de ce châssis comprenant un récipient de réception (11) et un tube (8) pour recueillir et évacuer l'eau filtrée, un décanteur (1) étant disposé au-dessus de l'unité de filtrage (9), ce décanteur (1) étant pourvu en correspondance avec sa sortie d'évacuation d'un bec de versement tournant (4) pour alimenter les récipients filtrants (6), ces récipients filtrants (6) étant placés au-dessous et tournés vers la section de livraison du bec de versement tournant (4), ce bec tournant possédant une partie allongée s'étendant radialement sur le contour circulaire du châssis, son axe de rotation passant par le centre du châssis circulaire et la sortie d'évacuation étant coaxiale avec cet axe de rotation.

Fig. 1

4

12

7

6

Fig. 2

Fig. 3

6 →

6

13

Fig 4

13

6 →

Fig. 5

3